# EUROPÄISCHE PATENTANMELDUNG

(11) **EP 0 753 345 A2**
(43) Veröffentlichungstag der Anmeldung: **15.01.1997**
(21) Anmeldenummer: 96109452.1
(22) Anmeldetag: 13.06.1996
(51) Int. Cl.: B01J 23/34, B01D 53/86, C22C 22/00

(54) **Manganhaltiger vollmetallischer Oxidationskatalysator**

(30) Priorität: 26.10.1995 DE 19539826; 12.07.1995 DE 19525303
(71) Anmelder: Krupp VDM GmbH, 58791 Werdohl (DE)
(72) Erfinder: Herda, Wilfried, 40489 Düsseldorf (DE); Heubner, Ulrich, Dr., 58791 Werdohl (DE); Koppe, Jürgen, Dr., 06258 Schkopau (DE); Lausch, Hartmut, Dr., 06128 Halle (DE)
(74) Vertreter: Cohausz & Florack

(57) **Zusammenfassung**

Manganhaltiger vollmetallischer Katalysator für die Oxidation kohlenwasserstoffhaltiger und/oder rußhaltiger Gemische in der Gasphase, wobei der Katalysator gebildet wird durch eine Mangan-Nickel-Kupferlegierung mit 30 bis 85 Masse-% Mangan, mit 5 bis 50 Masse-% Kupfer, mit 5 bis 50 Masse-% Nickel, und mit bis zu insgesamt 5 Masse-% an Eisen, Chrom, Aluminium, Titan, Molybdän, Phosphor, Stickstoff, Silizium und Schwefel einzeln oder zu mehreren sowie weiteren üblichen Verunreinigungen, und bei dem die Legierung zunächst in sauerstoffhaltiger Atmosphäre einer ersten oxidierenden thermischen Behandlung bei einer Temperatur im Bereich von 400 bis 1 000 °C unterzogen wird, wonach die Legierung einem Reduktionsprozeß und nachfolgend einer zweiten reoxidierenden thermischen Behandlung in sauerstoffhaltiger Atmosphäre bei einer Temperatur von 300 bis 1 000 °C unterworfen wird.

## Beschreibung

Die Erfindung betrifft einen Mangan, Nickel und Kupfer enthaltenden vollmetallischen Katalysator für die Oxidation kohlenmonoxid- und/oder kohlenwasserstoffhaltiger und/oder rußhaltiger Gemische in der Gasphase. Gleichermaßen wird ein Verfahren zum Regenerieren eines solchen Katalysators offenbart.

Es ist bekannt, die Totaloxidation von Kohlenwasserstoffen zu Kohlendioxid und Wasser in Gegenwart eines Nickel, Mangan, Chrom und Eisen enthaltenden vollmetallischen Oxidationskatalysators durchzuführen (DE-PS 44 16 469.6-41). Dieser Katalysator wird aus einer Legierung mit (in Masse-%) 10 bis 50 % Nickel, bis 50 % Kupfer, bis 10 % Mangan, 10 bis 30 % Chrom und bis 50 % Eisen durch thermische Behandlung unter sauerstoffhaltiger Atmosphäre für eine Zeit von 0,25 bis 10 Stunden bei Temperaturen von 400 bis 1 000 °C erzeugt.

Da es jedoch aufgrund einer Mischungslücke legierungstechnisch nicht möglich ist, in Nickel-Chrom-Legierungen mehr als 5 % Kupfer hineinzulegieren, muß durch eine nachträgliche Behandlung die notwendige Kupfermenge entweder elektrolytisch bzw. mittels Zementation oder durch eine andere Methode auf die Legierung aufgebracht werden. Dieser Schritt erfordert einen erhöhten technologischen Aufwand und ist insbesondere schwierig reproduzierbar.

Bei diesen und bei den übrigen im Stand der Technik bekannten Oxidationskatalysatoren besteht weiterhin der Nachteil, daß sie erst im Temperaturbereich oberhalb 400 °C die organischen Komponenten in Gasströmen oxidieren und daß insbesondere Rußteilchen im Temperaturbereich unterhalb von 500 °C nicht oxidiert werden.

Damit besteht in Gegenwart von Rußteilchen die Gefahr, daß die Katalysatoroberfläche bei relativ niedrigen Arbeitstemperaturen unterhalb von 500 °C durch Rußteilchen so abgedeckt wird, daß sie nicht mehr katalytisch aktiv ist. Dies ist auch immer dann der Fall, wenn ein Abgaskatalysator nicht im optimalen Arbeits- und Temperaturbereich betrieben wird, also etwa in der Anlauf- oder Startphase bei Kfz-Diesel-Katalysatoren. Für solche und viele weitere Einsatzfälle ist es erwünscht, daß der Katalysator bereits in der relativ "kalten" Phase bei Temperaturen von bis zu 250 °C katalytisch wirksam ist.

Der Erfindung liegt nun die Aufgabe zugrunde, einen einfach herzustellenden, leicht zu entsorgenden und leistungsfähigen Katalysator für die Totaloxidation von kohlenwasserstoffhaltigen und/oder rußhaltigen Gasgemischen bereitzustellen, der schon in einem niedrigen Temperaturbereich katalytisch wirksam wird, der ohne großen Aufwand regeneriert werden kann und zugleich über eine hohe Wärmeleitfähigkeit verfügt.

Diese Aufgabe wird gelöst durch einen Katalysator, der gebildet wird durch eine Mangan-Nickel-Kupferlegierung mit 30 bis 85 Masse-% Mangan, mit 5 bis 50 Masse-% Kupfer, mit 5 bis 50 Masse-% Nickel, und mit bis zu insgesamt 5 Masse-% an Eisen, Chrom, Aluminium, Titan, Molybdän, Phosphor, Stickstoff, Silizium und Schwefel einzeln oder zu mehreren sowie weiteren üblichen Verunreinigungen, und bei dem die Legierung zunächst in sauerstoffhaltiger Atmosphäre einer ersten oxidierenden thermischen Behandlung bei einer Temperatur im Bereich von 400 bis 1000 °C unterzogen wird, wonach die Legierung einem Reduktionsprozeß und nachfolgend einer zweiten reoxidierenden thermischen Behandlung in sauerstoffhaltiger Atmosphäre bei einer Temperatur von 300 bis 1000 °C unterworfen wird.

Die in einer sauerstoffhaltigen Atmosphäre erfolgende erste oxidierende Behandlung sowie die nachfolgende Reduktion führt zu einer Voreinstellung der Katalysatoroberfläche, bei der Metallkationen unterschiedlicher Wertigkeit und/oder Metallatome in einem reaktiven, partiell reduzierten Oxidgitter vorliegen und somit bei der nachfolgenden Reoxidation mit Sauerstoff in einem durch die Temperatur- und Prozeßführung bei der Herstellung bestimmten Maße reagieren können.

Der so entstandene Katalysator wird dann innerhalb von Abgasanlagen oder Reaktoren für die Oxidation kohlenwasserstoffhaltiger und/oder rußhaltiger Abgasgemische eingesetzt und führt durch die katalytisch wirksame Oxidschicht zur Oxidation des Abgases, wobei die in der Oberfläche des Katalysators gebundenen Sauerstoffanionen mit den Kohlenwasserstoffen des Abgases reagieren, während die Sauerstoff- bzw. Luftanteile im Abgas gleichermaßen mit der Katalysatoroberfläche reagieren und die freigewordenen Plätze der Sauerstoffanionen ersetzen, so daß der Oxidationsprozeß für das Abgasgemisch als solches aufrechterhalten werden kann.

Der Reduktionsprozeß bei der Herstellung des Katalysators erfolgt vorteilhafterweise unter Zufuhr reduzierender Gase, so daß hier für die Prozeßführung bei der Herstellung ein einfach zu handhabendes und sicher an allen Oberflächenbereichen wirkendes Reduktionsmittel zur Verfügung steht.

Vorteilhafterweise und insbesondere bei einer Serienherstellung nutzt man hier Wasserstoff und/oder Kohlenwasserstoff, der an vielen Orten in den entsprechenden Mengen zu niedrigen Kosten zur Verfügung steht und keine Rückstände auf dem Katalysator verursacht.

Zur Beschleunigung und zur sicheren Prozeßsteuerung bei der Ausbildung der Aktivzentren auf der Katalysatoroberfläche besteht eine vorteilhafte Ausbildung darin, daß die Reduktion bei der Verwendung von Gasen, wie z.B. Wasserstoff und/oder Kohlenwasserstoff als Reduktionsmittel durch eine zwischengeschaltete thermische Behandlung in einem Temperaturbereich von 150 bis 400 °C erfolgt.

In einer weiteren vorteilhaften Ausführung dient als Reduktionsmittel für den Reduktionsprozeß eine nach dem sich der ersten Oxidationsbehandlung anschließenden Abkühlung aufgebrachte oxidierbare organische Substanz. Nach dem Trocknen der organischen Substanz kann dann direkt ohne eine zwischengeschaltete thermische Behandlung die zweite reoxidierende Behandlung der Legierung angeschlossen werden, wobei dann zunächst durch vollständige Oxidation der als Reduktionsmittel aufgebrachten organischen Substanz, d.h. also durch Verbrennen, die Katalysator-Oberfläche einem Reduktionsprozeß unterworfen wird und dann in der vorhandenen sauerstoffhaltigen Atmosphäre in der vorbestimmten Art oxidiert wird. Hierbei wird also die Temperaturführung in der zweiten Oxidationsphase gleichzeitig zu einer vorhergehenden Reduktion der Katalysatoroberfläche genutzt, was den gesamten Prozeß fertigungstechnisch und in bezug auf die Kosten günstig beeinflußt.

Vorteilhafterweise wird die oxidierbare organische Substanz in Form und als Bestandteil einer wäßrigen Lösung bzw. als Flüssigkeit aufgebracht, da auch hier eine sichere Benetzung der Katalysator-Oberfläche erfolgt und einfache Tränkungs-, Sprüh- oder Tauchverfahren genutzt werden können.

Geeignete Lösungen mit bezogen auf die Legierung guten reduzierenden Eigenschaften und besonders günstigen Herstellungs- und Bezugsmöglichkeiten sind einfache Zucker- oder Stärkelösungen, oder auch wäßrige Lösungen, die Polyvinylalkohol enthalten. Nutzbar sind jedoch auch andere organische Substanzen in Lösung, Flockungsmittel oder Emulsionen.

Vorteilhafterweise und zur Verstärkung der katalytischen Wirkung beispielsweise bei der Oxidation rußhaltiger Gasgemische werden die Oberflächen und/oder die oberflächennahen Bereiche der Legierung mit Edelmetallen dotiert. Besonders geeignet sind hier Platin, Palladium und/oder Silber, mit denen man eine Totaloxidation solcher rußhaltiger Gemische erreicht.

In einer weiteren vorteilhaften Ausbildung erfolgt die Dotierung mit Edelmetallen durch die Zugabe von Edelmetallionen zu der vor dem Reduktionsprozeß aufgebrachten oxidierbaren organischen Substanz. Hierdurch lassen sich auf einfache Weise in den nachfolgenden Reduktions- und Oxidationsprozessen die entsprechenden Edelmetalldotierungen auf der Oberfläche des Katalysators erreichen.

Eine besonders wirksame Form der Dotierung ergibt sich dann, wenn einer eine oxidierbare organische Substanz enthaltende und vor dem Reduktionsprozeß aufgebrachten wäßrigen Lösung bis zu 100 g/l Platin-, Palladium- und/oder Silberionen zugesetzt werden. Durch eine solche Prozeßführung bei der Herstellung des Katalysators ergibt sich die bereits erwähnte sichere Benetzung sowie eine gesteuerte und genau einzustellende Dotierung.

Die Legierung kann hier in den jeweils angepaßten Formen vorliegen, z.B. in Form von Spänen, die ebenso wie z.B. ein Gestrick oder ein Drahtgewebe über eine gewünschte besonders große Oberfläche verfügen.

Die erste oxidierende thermische Behandlung erfolgt vorteilhafterweise über einen Zeitraum von 0,25 bis 5 Stunden, wodurch eine sorgfältige Anpassung an Oxidationsmittel und Katalysator und eine sichere Oxidation der gesamten Oberfläche ermöglicht wird. Die gleichen Vorteile, insbesondere eine sehr gut steuerbare teilweise Oxidation bis zu einem für die nachfolgenden Einsatzzwecke als Katalysator bestimmten Oxidationsgrad ergeben sich dadurch, daß die zweite oxidierende thermische Behandlung über einen Zeitraum von 5 Minuten bis 3 Stunden erfolgt.

Ein besonders geeignetes Verfahren zum Regenerieren eines solchen Katalysators nach einem möglichen Abfall in der Katalysatoraktivität ergibt sich dadurch, daß die Legierung einer oxidierenden thermischen Behandlung unterworfen wird, daß je nach vorhergehendem Abfall der Katalysatoraktivität danach eine eine oxidierbare organische Substanz enthaltende wäßrige Lösung auf die Katalysator-Oberfläche aufgebracht wird, wobei der Lösung zur Dotierung der Oberfläche und/oder der oberflächennahen Bereiche mit Edelmetallen bis zu 100 g/l Platin-, Palladium-, und/oder Silberionen zugesetzt werden, und daß die Legierung danach einem Reduktionsprozeß und nachfolgend einer reoxidierenden thermischen Behandlung in sauerstoffhaltiger Atmosphäre bei einer Temperatur von 300 bis 1 000 °C unterworfen wird.

Damit wiederholt man lediglich einige beim Herstellungsprozeß des Katalysators notwendigen Schritte und gelangt allein damit zur Regeneration und zur Wiedereinsetzbarkeit des Oxidationskatalysators. Selbstverständlich können diese Schritte in der bereits in bezug auf den Herstellungsprozeß weitergebildeten Art, d.h. also mit den genannten unterschiedlichen Reduktionsmitteln und mit den genannten Zeitintervallen durchgeführt werden. Je nach vorhergehendem Abfall der Katalysatoraktivität können dabei lediglich einige oder alle Oxidations-/Reduktions- und Dotierungsschritte zur Regeneration durchgeführt werden.

Die Legierung kann metallurgisch bedeutsame Zusätze, wie Eisen, Mangan, Aluminium, Titan, Molybdän, Phosphor, Stickstoff, Silizium oder Schwefel bis insgesamt 5 % enthalten, die selber nicht besonders katalytisch wirksam sind.

Der erfindungsgemäße Katalysator verfügt über eine sehr gut haftende katalytisch wirksame Oxidschicht, eine hohe katalytische Aktivität und eine hohe Wärmeleitfähigkeit.

Der verbrauchte und nicht mehr regenerierbare Katalysator wird eingeschmolzen und erneut zur erfindungsgemäßen Legierung verarbeitet.

In den nachfolgenden Beispielen sind die %-Angaben Masse-%. Die Analysen des Gasgemisches nach dem Verlassen des Reaktors erfolgten gaschromatografisch.

### Beispiele

### Beispiele 1 bis 5 zur Oxidation von Kohlenwasserstoffen

In einen Strömungsrohrreaktor wurden jeweils 2,0 g Katalysator gegeben. Die Versuche erfolgten bei unterschiedlichen Temperaturen und einem Druck von 1,5 bar unter folgenden Belastungen: 10 Nl/h Luft mit jeweils 5 000 ppm eines der nachfolgend genannten Kohlenwasserstoffe.

Dabei wurden die in Tabelle 1 dargestellten Ergebnisse erhalten.

**Tabelle 1**

| Umsatz zu CO₂ und H₂O sowie Tₘᵢₙ, die minimale Reaktortemperatur, bei der die Totaloxidation beginnt in Abhängigkeit von verschiedenen Kohlenwasserstoff-/Luft-Gemischen | | | |
|---|---|---|---|
| Kohlenwasserstoff | Katalysator | Tₘᵢₙ (°C) | Umsatz zu CO₂ und H₂O bei 400 °C (%) |
| Beispiel 1: n-Hexan | Eine Legierung, bestehend aus 72 % Mangan, 17 % Kupfer und 10 % Nickel, in Form von 0,01 mm starken Spänen wurde 1 h lang bei 900 °C unter Luft geglüht. Nach dem Abkühlen wurde der Katalysator 3 Minuten lang in eine wäßrige Lösung mit 2 % Polyvinylalkohol getaucht, herausgenommen, getrocknet und erneut für 1 h bei 450 °C unter Luft geglüht. | 195 | 90 |
| Beispiel 2: n-Hexan | Eine Legierung, bestehend aus 69 % Mangan, 19 % Kupfer und 11 % Nickel, in Form von 0,01 mm starken Spänen wurde 1 h lang bei 900 °C unter Luft geglüht. Nach dem Abkühlen wurde der Katalysator 3 Minuten lang in eine wäßrige Lösung, die 22 g/l AgNO₃ und 1 % Polyvinylalkohol enthielt, getaucht, herausgenommen, getrocknet und erneut für 1 h bei 450 °C unter Luft geglüht. | 190 | 95 |
| Beispiel 3: n-Hexan | Eine Legierung, bestehend aus 74 % Mangan, 16 % Kupfer und 9 % Nickel, in Form von Draht mit 0,2 mm Durchmesser, wurde 1 h lang bei 900 °C unter Luft geglüht. Nach dem Abkühlen wurde der Katalysator 3 Minuten lang in eine wäßrige Lösung, die 36 g/l Hexachloroplatinsäure und 1 % Polyvinylalkohol enthielt, getaucht, herausgenommen, getrocknet und erneut für 1 h bei 450 °C unter Luft geglüht. | 125 | 100 |
| Beispiel 4: Toluen | Gleicher Katalysator wie im Beispiel 1. | 225 | 75 |
| Beispiel 5: Toluen | Eine Legierung, bestehend aus 65 % Mangan, 20 % Kupfer und 14 % Nickel, in Form von 0,01 mm starken Spänen wurde 1 h lang bei 900 °C unter Luft geglüht. Nach dem Abkühlen wurde der Katalysator 3 Minuten lang in eine wäßrige Lösung, die 22 g/l Palladiumchlorid und 2 % Stärke enthielt, getaucht, herausgenommen, getrocknet und erneut für 1 h bei 450 °C unter Luft geglüht. | 185 | 98 |

### Beispiele 6 und 7 zur Oxidation von Rußteilchen

In einem Strömungsrohrreaktor mit einem Durchmesser von 13 cm und einer Länge von 40 cm wurden für jeden Versuch 2 l Katalysator in Form von 0,01 mm starken Spänen gegeben. Das Schüttgewicht der Katalysatoren betrug einheitlich 0,65 kg/l. Durch diesen Reaktor strömten anschließend 100 Nm³/h Abgas aus einem 2-Liter-Dieselmotor bei einer Gastemperatur von 250 °C für eine Zeit von jeweils 4 Stunden. Verglichen wurde der erfindungsgemäße Katalysator mit einem aus einer anderen Legierung bestehenden Katalysator (Nickel-Kupfer-Katalysator, Vergleichsbeispiel) für die Oxidation von kohlenwasserstoffhaltigen Abgasen, der lediglich einer Glühbehandlung unterworfen wurde.

Während des Versuchs wurde der durch den Rußabbrand bewirkte Temperaturanstieg ΔT im Strömungsrohrreaktor gemessen. Nach Versuchsende wurde der ausgebaute Katalysator ausgewogen, 1 Stunde lang unter Luft bei 650 °C geglüht, wobei anhaftende Rußteilchen verbrannten, und erneut ausgewogen. Die Gewichtsdifferenz zwischen der ersten und zweiten Wägung Δm ist ein Maß für die Rußmenge, die sich auf dem Katalysator abscheidet, ohne zu oxidieren.

Es wurden folgende Ergebnisse erhalten:

**Tabelle 2**

| ΔT und Δm bei Einsatz unterschiedlicher Katalysatoren | | | |
|---|---|---|---|
| | Katalysator | ΔT (°C) | Δm (g) |
| Beispiel 6 (Nickel-Kupfer-Katalysator, Vergleichsbeispiel) | Eine Legierung, bestehend aus 63 % Nickel, 34 % Kupfer, 1,25 % Mangan und 1,5 % Eisen, in Form von 0,01 mm starken Spänen, wird 1 h lang bei 850 °C unter Luft geglüht. | 25 | 1,82 |
| Beispiel 7 | Gleicher Katalysator wie im Beispiel 1. | 50 | 0,00 |

## Patentansprüche

1. Manganhaltiger vollmetallischer Katalysator für die Oxidation kohlenmonoxid- und/oder kohlenwasserstoffhaltiger und/oder rußhaltiger Gemische in der Gasphase, wobei der Katalysator gebildet wird durch eine Mangan-Nickel-Kupferlegierung mit 30 bis 85 Masse-% Mangan, mit 5 bis 50 Masse-% Kupfer, mit 5 bis 50 Masse-% Nickel, und mit bis zu insgesamt 5 Masse-% an Eisen, Chrom, Aluminium, Titan, Molybdän, Phosphor, Stickstoff, Silizium und Schwefel einzeln oder zu mehreren sowie weiteren üblichen Verunreinigungen, und bei dem die Legierung zunächst in sauerstoffhaltiger Atmosphäre einer ersten oxidierenden thermischen Behandlung bei einer Temperatur im Bereich von 400 bis 1 000 °C unterzogen wird, wonach die Legierung einem Reduktionsprozeß und nachfolgend einer zweiten reoxidierenden thermischen Behandlung in sauerstoffhaltiger Atmosphäre bei einer Temperatur von 300 bis 1 000 °C unterworfen wird.

2. Katalysator nach Anspruch 1,
**dadurch gekennzeichnet,**
daß der Reduktionsprozeß unter Zufuhr reduzierender Gase durchgeführt wird.

3. Katalysator nach Anspruch 2,
**dadurch gekennzeichnet,**
daß der Reduktionsprozeß unter Zufuhr von Wasserstoff und/oder Kohlenwasserstoffen durchgeführt wird.

4. Katalysator nach Anspruch 1,
**dadurch gekennzeichnet,**
daß das Reduktionsmittel für den Reduktionsprozeß durch eine nach dem sich der ersten Oxidationsbehandlung anschließenden Abkühlung aufgebrachte oxidierbare organische Substanz gebildet wird.

5. Katalysator nach Anspruch 4,
**dadurch gekennzeichnet,**
daß die oxidierbare organische Substanz in Form und als Bestandteil einer wäßrigen Lösung aufgebracht wird.

6. Katalysator nach Anspruch 5,
**dadurch gekennzeichnet,**
daß als wäßrige Lösung eine Zucker- oder Stärkelösung aufgebracht wird.

7. Katalysator nach Anspruch 5,
**dadurch gekennzeichnet,**
daß die wäßrige Lösung einen Polyvinylalkohol enthält.

8. Katalysator nach einem oder mehreren der vorhergehenden Ansprüche, **dadurch gekennzeichnet,**
daß die Oberfläche und/oder die oberflächennahen Bereiche der Legierung mit Edelmetallen dotiert werden.

9. Katalysator nach Anspruch 8,
**dadurch gekennzeichnet,**
daß die Oberfläche und/oder die oberflächennahen Bereiche der Legierung mit Platin, Palladium und/oder Silber dotiert werden.

10. Katalysator nach einem der Ansprüche 5 bis 9,
**dadurch gekennzeichnet,** daß die Dotierung mit Edelmetallen durch die Zugabe von Edelmetallionen zu der vor dem Reduktionsprozeß aufgebrachten oxidierbaren organischen Substanz erfolgt.

11. Katalysator nach Anspruch 10,
**dadurch gekennzeichnet,**
daß einer eine oxidierbare organische Substanz enthaltende und vor dem Reduktionsprozeß aufgebrachten wäßrigen Lösung bis zu 100 g/l Platin-, Palladium-, und/oder Silberionen zugesetzt werden.

12. Katalysator nach einem der Ansprüche 2 oder 3,
**dadurch gekennzeichnet,**
daß die Reduktion durch eine zwischengeschaltete thermische Behandlung in einem Temperaturbereich von 150 bis 400 °C erfolgt.

13. Katalysator nach einem der vorhergehenden Ansprüche,
**dadurch gekennzeichnet,**
daß die erste oxidierende thermische Behandlung über einen Zeitraum von 0,25 bis 5 Stunden erfolgt.

14. Katalysator nach einem der vorhergehenden Ansprüche,
**dadurch gekennzeichnet,**
daß die zweite oxidierende thermische Behandlung über einen Zeitraum von 5 Minuten bis 3 Stunden erfolgt.

15. Verfahren zum Regenerieren eines Katalysators nach einem der Ansprüche 1 bis 14,
**dadurch gekennzeichnet,**
daß die Legierung einer oxidierenden thermischen Behandlung unterworfen wird, daß je nach vorhergehendem Abfall der Katalysatoraktivität danach eine eine oxidierbare organische Substanz enthaltende wäßrige Lösung auf die Katalysator-Oberfläche aufgebracht wird, wobei der Lösung zur Dotierung der Oberfläche und/oder der oberflächennahen Bereiche mit Edelmetallen bis zu 100 g/l Platin-, Palladium-, und/oder Silberionen zugesetzt werden, und daß die Legierung danach einem Reduktionsprozeß und nachfolgend einer reoxidierenden thermischen Behandlung in sauerstoffhaltiger Atmosphäre bei einer Temperatur von 300 bis 1 000 °C unterworfen wird.
